# EUROPEAN PATENT SPECIFICATION

(11) **EP 0 460 750 B1**
(45) Date of publication and mention of the grant of the patent: **15.01.1997**
(21) Application number: 91201336.4
(22) Date of filing: 03.06.1991
(51) Int. Cl.: H04N 7/08, H04N 7/00

(54) **Letterbox extended television system**
Erweitertes Fernsehsystem mit Letterboxverfahren
Système de télévision étendue avec méthode letter-box

(30) Priority: 06.06.1990 NL 9001271
(43) Date of publication of application: 11.12.1991
(73) Proprietor: Philips Electronics N.V., 5621 BA Eindhoven (NL)
(72) Inventor: Führen, Marcel, NL-5656 AA Eindhoven (NL); van de Waterlaat, Adrianus C.J.G., NL-5656 AA Eindhoven (NL); Corrêa, Carlos Da Cunha Ritto, NL-5656 AA Eindhoven (NL)
(74) Representative: Kooiman, Josephus Johannes Antonius

(56) References cited:
- EP-A- 0 253 623
- EP-A- 0 340 460
- EP-A- 0 357 144
- EP-A- 0 432 529
- WO-A-89/02687
- WO-A-91/14346
- WO-A-91/15085
- DE-C- 3 901 117
- US-A- 4 907 218
- JOURNAL OF THE SOCIETY OF MOTION PICTURE ENGINEERS, vol. 98, no. 10, 30 October 1989, NEW YORK US pages 748 - 753; W.BRETL ET AL: 'Spectrum-Compatible High-Definition Television Transmission System'
- IEEE TRANSACTIONS ON BROADCASTING, vol. 34, no. 3, 30 September 1988, NEW YORK US pages 313 - 323; G.W.MEEKER: 'High Definition and High Frame Rate Compatible N.T.S.C. Broadcast Television System'
- FERNSEH UND KINO TECHNIK, vol. 43, no. 10, 30 October 1989, BERLIN DE pages 522 - 526; W.HABERMANN: '"Breit-Pal",Anlass und Überlegungen zu einer Variante des PAL-Standards'

## Description

The invention relates to a television system in which a wide-image picture having, for example a 16:9 aspect ratio is transmitted within a standard width picture having, for example a 4:3 aspect ratio, whereby a letterbox-like aspect is obtained, and in which additional information is transmitted in at least one horizontal black bar adjacent to said wide-image picture.

Such a television system is described in WO-A-8905555 (BBC). In extensions of current composite TV systems such as PAL, SECAM and NTSC it is often necessary to transmit additional analog or digital information in the same channel, for example, for extra resolution or for realising a wider image in what is called a side panel system. This means that subchannels within such a channel must be found in which this additional information can be transmitted for use in an adapted receiver.

When transmitting picture formats having an aspect ratio of more than 4:3, a possible solution is to transmit the picture (partly or not partly) in letterbox. In these cases no ordinary video information is transmitted during a number of picture lines which are visible in the standard receiver. Consequently, these lines can be utilized to transmit additional information for an adapted extended receiver. Both digital and analog additional information is possible.

As described in WO-A-8905555, the additional data is at a sufficiently low level to be substantially invisible when viewed on a conventional receiver. The data levels are positioned above and below black, so that the mean level is black. It was expected that the synchronization circuits see the data as a line of black so that the additional signals do not interfere with the receiver synchronization circuits.

EP-A-0,359,144 discloses a method of encoding a television signal in compatibility with a standard aspect ratio television signal, in which a wide-image picture and at least one horizontal border are transmitted within a standard aspect ratio picture (column 1, lines 22-44), and in which an additional information signal is encoded within said horizontal border (column 2, lines 7-24), comprising the step of encoding said additional information signal to produce a horizontal border signal having substantially no horizontal low-frequency components (column 2, lines 18-24 and column 7, line 45 - column 8, line 20).

EP-A-0,432,529 which is published on 19.06.91 and claims a priority date of 13.12.89, comprised in the state of the art pursuant to Article 54(3,4) EPC insofar as the designated Contracting States DE, FR, GB and IT are concerned, discloses a system for transmitting wide-image video signals for display on television receivers having a usual or an enlarged aspect ratio, in accordance with the so-called letterbox-method. In the marginal lines only higher frequency signals are transmitted, to prevent usual synchronizing signal separating circuits from operating with errors.

WO-A-9114,346 which is published on 19.09.91 and claims a priority date of 07.03.90, comprised in the state of the art pursuant to Article 54(3,4) EPC with regard to all designated Contracting States, discloses a television broadcasting system according to the letterbox color television system. Additional data are transmitted with an appreciably reduced amplitude for reasons of compatibility, low-frequency components having a relatively high amplitude. This results, however, in a reduction of the signal-to-noise ratio, and disturbances in synchronization occur in known television receivers. The amplitude of the additional data can be increased without the disturbances in synchronization that occur in known television receivers if the additional data are transmitted in the form of a vestigial sideband modulation of the color carrier. The frequency response of known IF filters can be exploited advantageously to form a Nyquist flank on the color carrier. If the phase used is a constant V-phase of the color carrier, any disturbances in the compatible reception are said to be advantageously slight.

It is an object of the invention to provide a letterbox extended television system in which interference of the additional signals with the receiver synchronization circuits is substantially completely excluded. It is a further object to reduce the visibility of the additional signals upon display on a standard receiver.

One aspect of the invention provides a method of encoding a television signal in compatibility with a standard aspect ratio television signal as defined in claim 1. A second aspect of the invention provides an extended television signal as defined in claim 7. A third aspect of the invention provides a method of decoding an extended television signal as defined in claim 8. A fourth aspect of the invention provides an apparatus for decoding an extended television signal as defined in claim 9.

Advantageous embodiments of the invention are set out in the dependent claims.

It was found that, to avoid synchronizing problems in standard receivers, the signal to be additionally transmitted (which signal may also substantially exceed the blanking level, dependent on the amplitude) should not comprise any low-frequency horizontal components below 500 kHz.

These and other (more detailed) aspects of the invention will be described and elucidated with reference to the drawings and some examples.

In the drawings:
Fig. 1 shows a wide-image picture transmitted within a standard aspect ratio format;
Fig. 2 shows a possible average horizontal spectral distribution of an analog additional signal;
Fig. 3a shows a possible frequency diagram of an additional signal after low-pass filtering and modulation;
Fig. 3b shows the additional signal of Fig. 3a after low-pass filtering with a low-pass filter having a Nyquist edge;
Figs. 4a and 4b graphically show the dependence of the relative display luminance on the subcarrier phase;
Fig. 5 shows an embodiment of an encoder section according to the present invention; and
Fig. 6 shows an embodiment of a decoder section according to the present invention.

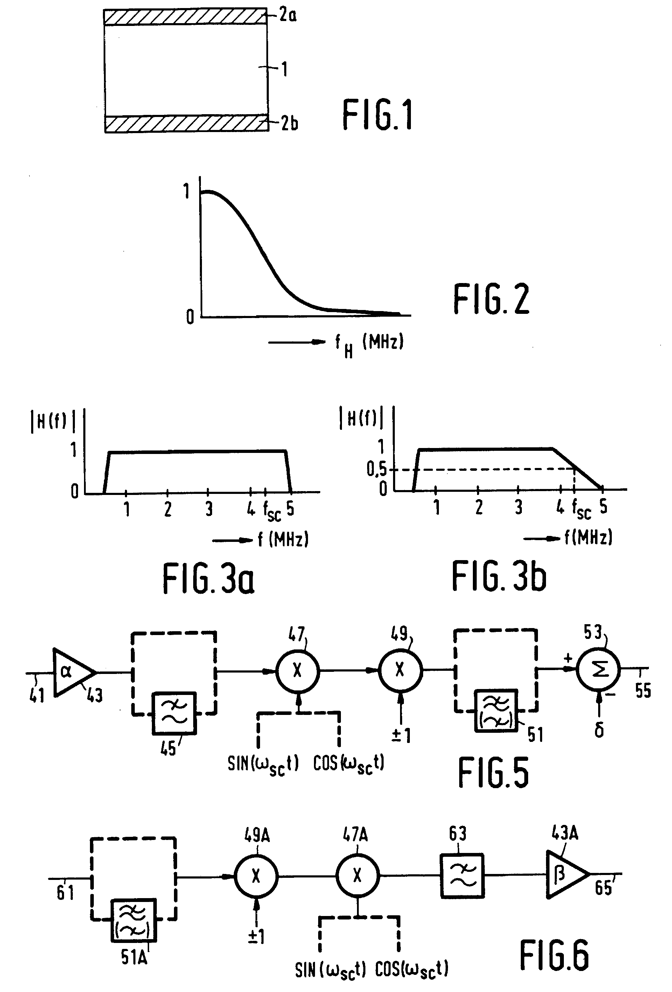

Fig. 1 shows a "letterbox" transmission format in which a wide-image picture 1 and at least one horizontal border 2a,2b together form a standard aspect ratio picture.

Fig. 2 shows the average horizontal spectral distribution of a television line. If such a signal were directly inserted into the horizontal borders, synchronizing problems would occur, the severity of which depends on the amplitude of the signal, (in fact, it may comprise, for example, a negative DC component). Also, such an additional signal will exhibit a relatively large visibility in a standard receiver. The present invention offers a solution to the last-mentioned two problems.

The solution to possible synchronizing problems is to render the additional signal free from low-frequency horizontal components, especially from DC components. In a preferred embodiment, the spectrum of the additional signal is inverted by means of a modulation on a subcarrier which should have a frequency which is as high as possible but is smaller than the video bandwidth. If the bandwidth of the additional signal is limited to this subcarrier frequency minus, for example, 500 kHz, the first 500 kHz is free from power after modulation. Synchronizing problems are hereby avoided as standard receivers use the lowest frequencies of the television signal to obtain the horizontal and vertical synchronizing signals therefrom. Moreover, as a consequence of this modulation, the additional signal obtains a random appearance reducing its visibility.

The video channel band limitation of approximately 5 MHz (dependent on the transmission standard) reduces the signal to a vestigial sideband signal, which is also necessary to avoid distortion of the original low-frequency components (generally, single sideband modulation would thus not be possible). The frequency spectrum of such a vestigial sideband signal is illustrated in Fig. 3a. A low-pass filter having a Nyquist edge may be used, thus rendering it unnecessary in the extended receiver and reducing the visibility of the signal in a standard receiver. Fig. 3b illustrates the frequency spectrum of the signal of Fig. 3a after low-pass filtering with a Nyquist edge.

Since the extended receiver must demodulate the signal again, for which purpose it should know the exact subcarrier phase, the chrominance subcarrier may advantageously be used as subcarrier onto which the additional information signal is modulated, because its phase is known. This technique is equally usable in NTSC and SECAM systems.

In principle, any other subcarrier frequency may of course be used (which has advantages relating to the perceptibility of the generated color patterns in the standard receiver); however, it is then a problem that the subcarrier phase for the extended receiver should be additionally transmitted. In this case the subcarrier frequency should preferably be chosen to be such that components are produced in both U and V having the highest possible temporal frequency. In the case of PAL the subcarrier frequency should then preferably have a value of (2n+1)*F1/2, see EP-A-0,390,271 (PHN 12,893). In NTSC the same subcarrier frequency is preferably to be chosen, but it should also change 180 degrees in phase in a field-alternating manner, so that the additional information is transmitted in what is commonly referred to as the "Fukinuki hole", see EP-A-0,120,390 (Hitachi).

Another possibility is to render the subcarrier frequency to be a (simple) rational factor of the PAL subcarrier frequency (for example, 9/10).

A result of the spectrum inversion is that the high-power components will now be at high frequencies (starting from the spectral distribution of Fig. 2) and thus are subjectively less perceptible, but moreover a major part of them will be filtered out by the luminance notch filter which is present in substantially all standard receivers.

The result of the modulation on the PAL subcarrier is that a horizontal low-frequency color pattern will be visible in the standard receiver; however, since there is no associated low-frequency luminance pattern, the luminance of this color pattern will be small.

The phase of the chrominance subcarrier in the relevant video lines can be freely chosen with reference to the phase of the U subcarrier (for example, 0, 90, 180 or 270 degrees, but preferably 45 or 135 degrees) and can be shifted by 0 or 180 degrees in any arbitrary pattern as a function of the line number. Herein, the use of a U subcarrier means a modulation of the additional information signal onto a color subcarrier having the same phase as the one onto which the U color information is modulated, and the use of a V subcarrier means a modulation of the additional information signal onto a color subcarrier having the same phase as the one onto which the V color information is modulated.

The PAL television system does not comply with the constant-luminance principle. Consequently, the display luminance is not solely determined by the luminance signal Y, but also by the chrominance signals U and V, of which the U signal appears to have a higher influence on the display luminance than the V signal for most brightness settings. Therefore, if one desires to encode an additional information signal as invisibly as possible and one has to choose between modulation onto the U subcarrier or onto the V subcarrier, the V subcarrier, i.e. a phase shift of 90°, is preferred. However, if one is prepared to allow a slightly greater complexity, a phase shift of 45° or 135° appears to yield the lowest display luminance for all brightness settings.

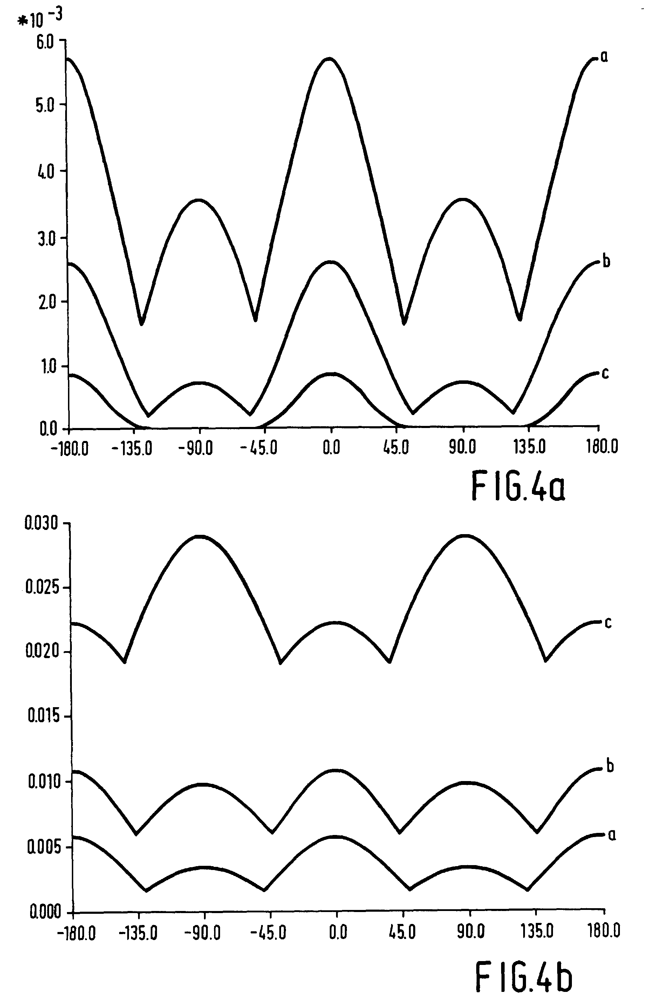

Figs. 4a and 4b illustrate for several brightness settings this dependence of the relative display luminance on the phase of the subcarrier with reference to the phase of the U subcarrier. In Fig. 4a, curve a corresponds to a zero brightness setting, curve b to a brightness setting of -0.1, and curve c corresponds to a brightness setting of -0.2. In Fig. 4b, curve a corresponds to a zero brightness setting, curve b to a brightness setting of +0.1, and curve c corresponds to a brightness setting of +0.2. These setting values are to be related to the video signal which has an amplitude between 0 and 1. It follows from Figs. 4a and 4b that the visibility of the additional signal will decrease if the picture is darkened, whereas the visibility of the additional signal will increase if the picture is made brighter.

If the additional signal is vertically correlated, its vertical correlation and hence its visibility can be greatly reduced by the alternating phase techniques to be described below.

A U subcarrier having a phase which is shifted in a line-alternating manner by 0/180 degrees or a constant-phase V subcarrier have the very favorable property that the visibility of color patterns will be reduced in the standard receiver as a result of the operations around the PAL delay line present in every PAL television receiver. The reduction is caused by the fact that in standard PAL receivers, U signals present at the input and the output, respectively, of the PAL delay line are averaged, so that an additional signal modulated onto the U subcarrier with a line-alternating phase is cancelled by this averaging operation and is therefore invisible upon display on standard PAL receivers. Also, in standard PAL receivers, V signals present at the input and the output of the PAL delay line are subtracted, so that a constant-phase additional signal modulated onto the V subcarrier is cancelled by this subtracting operation. Such cancellation is obtained for components which are transmitted in double sideband around the subcarrier. The latter remark is an argument in favor of arranging the above-mentioned filter with a Nyquist edge in the extended receiver instead of in the extended transmitter, so that the signal transmitted by the extended transmitter has components transmitted in double sideband which can be cancelled by the PAL delay line. Therefore, one of these two possibilities is preferred for PAL.

Two other possibilities are either a V subcarrier line-alternating by 0/180 degrees or a constant-phase U subcarrier, whereby in both possibilities the phase also changes 0/180 degrees in a field-alternating manner so that in a first approximation the color patterns produced in the standard receiver will have a 25 Hz repetition frequency which is hardly visible. In NTSC, the use of correspondingly field-alternating I or Q subcarriers is also a sensible method.

These alternating phase techniques can be represented by the following table, in which:

**Table 1.**

| F-sw : Field-alternating ±1 F : FALSE | | | | | |
|---|---|---|---|---|---|
| L-sw : Line-alternating ±1 T : TRUE | | | | | |
| | | PAL | | NTSC | |
| F-sw | L-sw | U | V | I | Q |
| F | F | 1 | 5 | 1 | 5 |
| F | T | 2 | 6 | 2 | 6 |
| T | F | 3 | 7 | 3 | 7 |
| T | T | 4 | 8 | 4 | 8 |

As noted above, numbers 2, 3, 5 and 8 of the 8 possibilities are preferred for PAL. Numbers 3, 4, 7 or 8 are preferred for NTSC. The functions themselves can be determined easily from the existing V switch signal and the field number (1 or 2) within a frame.

A small negative DC offset of, for example 5 % of the difference between the maximum white level and the maximum black level can be added to reduce the visibility to a further extent; such a small DC offset will not cause any synchronization problems. However, it turned out that better results can be obtained if no negative offset is applied.

To reduce the visibility upon display on the standard receiver, the peak-to-peak amplitude of the horizontal border signal is maximally about 60% and preferably about 20% of the black/white level difference, as the amplitude should have such a value that the signal can be regained with a satisfactory signal-to-noise ratio for the extended receiver and at the same time is minimally visible in a standard receiver. When the peak-to-peak amplitude is limited in this way, differential phase problems can be substantially excluded so that any measures of reducing differential phase problems are not necessary.

Fig. 5 shows different possibilities for the encoder section (the broken lines indicate the implementation possibilities among which a choice can be made).

Firstly, the additional and, for example analog input signal on input line 41, whose value is assumed to be unequal to zero during the "black bars" (horizontal borders) and to have preferably a spectral distribution in accordance with Fig. 2, is multiplied by a given factor (generally < 1) by multiplier 43; this multiplication may be effected at any arbitrary place in the encoder. Subsequently the signal is band-limited by band-pass filter 45 (only if this is not yet the case; dependent on the application) to the subcarrier frequency minus the bandwidth which should be free from power (for example, 500 kHz). Subsequently the signal is modulated on the U(I) or V(Q) subcarrier by modulator 47. Thereafter multiplier 49 multiplies the signal line-wise by +1 or -1 in accordance with a given line-alternating and/or field-alternating function mentioned above with reference to Table 1. The change of sign may be effected by placing multiplier 49 at any arbitrary point before the offset addition by adder 53.

As set out above, the output signal of multiplier 49 may be Nyquist filtered by Nyquist filter 51. Finally a small negative offset δ can be added by adder 53. The encoded horizontal border signal is available on output line 55 for combination with the wide-image picture signal to form the standard aspect ratio signal.

Fig. 6 shows the corresponding decoder section in which, with respect to Fig. 5, exactly the complementary operations are carried out. The encoded horizontal border signal is present on input line 61. If no filtering with a Nyquist edge (filter 51 of Fig. 5) has taken place in the encoder, it should take place in the decoder (filter 51A).

The signal on input line 61 or the output signal of Nyquist filter 51A is applied to multiplier 49A for a change-of-sign operation which is to proceed synchronously with the change of sign at the encoder side and may be effected at any arbitrary position. If no field-alternating change of sign is used, the synchronicity of the change of sign is easily obtained by means of the V switch signal which is already available in each PAL receiver. If a field-alternating change of sign is used, it should be indicated in one way or another in the video signal which field is present in a frame at a given instant.

The output signal of multiplier 49A is applied to demodulator 47A. Demodulation is to be effected at the same phase as in the encoder. This phase is directly determined from the chrominance subcarrier regenerated via the color burst. A low-pass filter 63 subsequent to the demodulator 47A is used to suppress the component at the double subcarrier frequency and (if added at the encoder side) the DC component shifted towards the subcarrier frequency.

Finally multiplier 43A multiplies the output signal of low-pass filter 63 by a known factor β so as to bring it to the correct amplitude level. The decoded additional information signal is available on output line 65.

When transmitting, for example, a picture signal having an aspect ratio of 16 : 9 in a letterbox format, only 431 lines per picture instead of 575 lines can be transmitted. The additional signal then comprises preferably line difference signals which can be used in a decoder according to the invention so as to obtain a 575-line picture signal again.

The above description shows preferred embodiments of the invention, but should not be limited thereto, as those skilled in the art will be able to conceive many modifications thereof which are within the scope of the following claims.

## Claims (Claims for the following Contracting State(s): DE, FR, GB, IT)

1. A method of encoding a television signal in compatibility with a standard aspect ratio television signal, comprising the steps of:
filtering said television signal to obtain a wide-image picture signal (1);
filtering said television signal to obtain an additional resolution information signal;
processing said additional resolution information signal to form at least one horizontal border signal (2a,2b); and
combining said wide-image picture signal (1) and said at least one horizontal border signal (2a,2b) to form a standard aspect ratio picture signal in which said wide-image picture signal (1) and said at least one horizontal border signal (2a,2b) occupy vertically adjacent positions; wherein
said processing step includes the steps of modulating (47) said additional resolution information signal onto a subcarrier signal to produce a modulated subcarrier signal having substantially no horizontal frequency components below 500 kHz, and further processing (49-53) said modulated subcarrier signal to form said at least one horizontal border signal (2a,2b), and wherein said at least one horizontal border signal has a peak-to-peak amplitude of less than about 60 % of a difference between a maximum black level and a maximum white level of said television signal.

2. A method as claimed in claim 1, wherein said additional resolution information signal is low-pass filtered (45) before said modulation (47) or wherein said modulated subcarrier signal is high-pass filtered.

3. A method as claimed in claim 1, wherein said subcarrier signal has the frequency of a standard chrominance subcarrier or of said standard chrominance subcarrier multiplied by a simple rational factor.

4. A method as claimed in claim 1, wherein said subcarrier signal has the frequency of a standard chrominance subcarrier and a phase shift of between 45° and 135°, borders inclusive, with reference to a color subcarrier having a phase equalling the one onto which U color information is modulated.

5. A method as claimed in claim 1, wherein said subcarrier signal has the frequency of a standard chrominance subcarrier and a line-alternating and/or field-alternating phase shift (49).

6. A method as claimed in claim 1, wherein said at least one horizontal border signal (2a,2b) has a peak-to-peak amplitude of less than about 20%, of a difference between a maximum black level and a maximum white level of said television signal.

7. An extended television signal in which a wide-image picture signal (1) and at least one horizontal border signal (2a,2b) together form a standard aspect ratio picture signal in which said wide-image picture signal (1) and said at least one horizontal border signal (2a,2b) occupy vertically adjacent positions, wherein
an additional resolution information signal modulated (47) onto a subcarrier signal forms a modulated subcarrier signal having substantially no horizontal frequency components below 500 kHz, said modulated subcarrier signal after further processing (49-53) forming said at least one horizontal border signal (2a,2b),and wherein said at least one horizontal border signal has a peak-to-peak amplitude of less than about 60 % of a difference between a maximum black level and a maximum white level of said television signal.

8. A method of decoding an extended television signal in which a wide-image picture signal (1) and at least one horizontal border signal (2a,2b) together form a standard aspect ratio picture signal in which said wide-image picture signal (1) and said at least one horizontal border signal (2a,2b) occupy vertically adjacent positions, and in which extended television signal an additional resolution information signal is encoded within said at least one horizontal border (2a,2b), said method comprising the steps of:
separating said at least one horizontal border signal (2a,2b) from said extended television signal; and
regaining (51A-43A) said additional resolution information signal from said at least one horizontal border signal (2a,2b) having substantially no horizontal frequency components below 500 kHz; wherein said regaining step (51A-43A) includes the step of demodulating (47A) a modulated subcarrier signal to produce said additional resolution information signal, and wherein said at least one horizontal border signal has a peak-to-peak amplitude of less than about 60 % of a difference between a maximum black level and a maximum white level of said television signal.

9. Apparatus for decoding an extended television signal in which a wide-image picture signal (1) and at least one horizontal border signal (2a,2b) together form a standard aspect ratio picture signal in which said wide-image picture signal (1) and said at least one horizontal border signal (2a,2b) occupy vertically adjacent positions, and in which extended television signal an additional resolution information signal is encoded within said at least one horizontal border (2a,2b), said apparatus comprising:
means for separating said at least one horizontal border signal (2a,2b) from said extended television signal; and
means (51A-43A) for regaining said additional resolution information signal from said at least one horizontal border signal (2a,2b) having substantially no horizontal frequency components below 500 kHz; wherein said regaining means (51A-43A) include means for demodulating (47A) a modulated subcarrier signal to produce said additional resolution information signal, and wherein said at least one horizontal border signal has a peak-to-peak amplitude of less than about 60 % of a difference between a maximum black level and a maximum white level of said television signal.

10. Apparatus as claimed in claim 9, wherein said modulated subcarrier signal has the frequency of a standard chrominance subcarrier or of said standard chrominance subcarrier multiplied by a simple rational factor.

11. Apparatus as claimed in claim 9, wherein said modulated subcarrier signal has the frequency of a standard chrominance subcarrier and a phase shift of between 45° and 135°, borders inclusive, with reference to a color subcarrier having a phase equalling the one onto which U color information is modulated.

12. Apparatus as claimed in claim 9, wherein said modulated subcarrier signal has the frequency of a standard chrominance subcarrier and a line-alternating and/or field-alternating phase shift (49A).

## Claims (Claims for the following Contracting State(s): ES, LU)

1. A method of encoding a television signal in compatibility with a standard aspect ratio television signal, comprising the steps of:
filtering said television signal to obtain a wide-image picture signal (1);
filtering said television signal to obtain an additional resolution information signal;
processing said additional resolution information signal to form at least one horizontal border signal (2a,2b); and
combining said wide-image picture signal (1) and said at least one horizontal border signal (2a,2b) to form a standard aspect ratio picture signal in which said wide-image picture signal (1) and said at least one horizontal border signal (2a,2b) occupy vertically adjacent positions; wherein
said processing step includes the steps of modulating (47) said additional resolution information signal onto a subcarrier signal to produce a modulated subcarrier signal having substantially no horizontal frequency components below 500 kHz, and further processing (49-53) said modulated subcarrier signal to form said at least one horizontal border signal (2a,2b).

2. A method as claimed in claim 1, wherein said additional resolution information signal is low-pass filtered (45) before said modulation (47) or wherein said modulated subcarrier signal is high-pass filtered.

3. A method as claimed in claim 1, wherein said subcarrier signal has the frequency of a standard chrominance subcarrier or of said standard chrominance subcarrier multiplied by a simple rational factor.

4. A method as claimed in claim 1, wherein said subcarrier signal has the frequency of a standard chrominance subcarrier and a phase shift of between 45° and 135°, borders inclusive, with reference to a color subcarrier having a phase equalling the one onto which U color information is modulated.

5. A method as claimed in claim 1, wherein said subcarrier signal has the frequency of a standard chrominance subcarrier and a line-alternating and/or field-alternating phase shift (49).

6. A method as claimed in claim 1, wherein said at least one horizontal border signal (2a,2b) has a peak-to-peak amplitude of less than about 60%, preferably less than about 20%, of a difference between a maximum black level and a maximum white level of said television signal.

7. An extended television signal in which a wide-image picture signal (1) and at least one horizontal border signal (2a,2b) together form a standard aspect ratio picture signal in which said wide-image picture signal (1) and said at least one horizontal border signal (2a,2b) occupy vertically adjacent positions, wherein
an additional resolution information signal modulated (47) onto a subcarrier signal forms a modulated subcarrier signal having substantially no horizontal frequency components below 500 kHz, said modulated subcarrier signal after further processing (49-53) forming said at least one horizontal border signal (2a,2b).

8. A method of decoding an extended television signal in which a wide-image picture signal (1) and at least one horizontal border signal (2a,2b) together form a standard aspect ratio picture signal in which said wide-image picture signal (1) and said at least one horizontal border signal (2a,2b) occupy vertically adjacent positions, and in which extended television signal an additional resolution information signal is encoded within said at least one horizontal border (2a,2b), said method comprising the steps of:
separating said at least one horizontal border signal (2a,2b) from said extended television signal; and
regaining (51A-43A) said additional resolution information signal from said at least one horizontal border signal (2a,2b) having substantially no horizontal frequency components below 500 kHz; wherein said regaining step (51A-43A) includes the step of demodulating (47A) a modulated subcarrier signal to produce said additional resolution information signal.

9. Apparatus for decoding an extended television signal in which a wide-image picture signal (1) and at least one horizontal border signal (2a,2b) together form a standard aspect ratio picture signal in which said wide-image picture signal (1) and said at least one horizontal border signal (2a,2b) occupy vertically adjacent positions, and in which extended television signal an additional resolution information signal is encoded within said at least one horizontal border (2a,2b), said apparatus comprising:
means for separating said at least one horizontal border signal (2a,2b) from said extended television signal; and
means (51A-43A) for regaining said additional resolution information signal from said at least one horizontal border signal (2a,2b) having substantially no horizontal frequency components below 500 kHz; wherein said regaining means (51A-43A) include means for demodulating (47A) a modulated subcarrier signal to produce said additional resolution information signal.

10. Apparatus as claimed in claim 9, wherein said modulated subcarrier signal has the frequency of a standard chrominance subcarrier or of said standard chrominance subcarrier multiplied by a simple rational factor.

11. Apparatus as claimed in claim 9, wherein said modulated subcarrier signal has the frequency of a standard chrominance subcarrier and a phase shift of between 45° and 135°, borders inclusive, with reference to a color subcarrier having a phase equalling the one onto which U color information is modulated.

12. Apparatus as claimed in claim 9, wherein said modulated subcarrier signal has the frequency of a standard chrominance subcarrier and a line-alternating and/or field-alternating phase shift (49A).

## Patentansprüche (Patentansprüche für folgende(n) Vertragsstaat(en): DE, FR, GB, IT)

1. Verfahren zum Codieren eines Fernsehsignals in Kompatibilität mit einem Fernsehsignal mit einem Norm-Seitenverhältnis, wobei dieses Verfahren die nachfolgenden Verfahrensschritte aufweist:
das Filtern des genannten Fernsehsignals zum Erhalten eines Breitbildsignals (1);
das Filtern des genannten Fernsehsignals zum Erhalten eines zusätzlichen Auflösungsinformationssignals;
das Verarbeiten des genannten zusätzlichen Auflösungsinformationssignals zum Bilden wenigstens eines horizontalen Randsignals (2a, 2b); und
das Kombinieren des genannten Breitbildsignals (1) und des genannten wenigstens einen horizontalen Randsignals (2a, 2b) zum Bilden eines Bildsignals mit einem Norm-Seitenverhältnis, wobei das genannte Breitbildsignal (1) und das genannte wenigstens eine horizontale Randsignal (2a, 2b) vertikal benachbarte Positionen einnehmen; wobei
der genannte Verarbeitungsschritt die Schritte der Modulation (47) des genannten zusätzlichen Auflösungsinformationssignals auf einem Hilfsträger zum Erzeugen eines modulierten Hilfsträgersignals mit nahezu keinen horizontalen Frequenzanteilen unterhalb 500 kHz, und weiterhin der Verarbeitung (49-53) des genannten modulierten Hilfsträgersignals zum Bilden des genannten wenigstens einen horizontalen Randsignals (2a, 2b) umfaßt, und wobei das genannte wenigstens eine horizontale Randsignal eine Spitze-zu-Spitze-Amplitude hat, die kleiner ist als etwa 60% einer Differenz zwischen einem Maximalschwarzpegel und einem Maximalweißpegel des genannten Fernsehsignals.

2. Verfahren nach Anspruch 1, wobei das genannte zusätzliche Auflösungsinformationssignal vor der genannten Modulation (47) tiefpaßgefiltert (45) wird oder wobei das genannte modulierte Hilfsträgersignal hochpaßgefiltert wird.

3. Verfahren nach Anspruch 1, wobei das genannte Hilfsträgersignal die Frequenz eines Norm-Farbhilfsträgers hat oder des genannten Norm-Farbhilfsträgers, multipliziert mit einem einfachen rationellen Faktor.

4. Verfahren nach Anspruch Hilfsträgersignal die Frequenz eines Norm-Farbhilfsträgers und eine Phasenverschiebung zwischen 45° und 135°, einschließlich der Ränder, aufweist, dabei bezugnehmend auf einen Farbhilfsträger mit einer Phase entsprechend derjenigen, der U Farbinformation aufmoduliert ist.

5. Verfahren nach Anspruch 1, wobei das genannte Hilfsträgersignal die Frequenz eines Norm-Farbhilfsträgersignals und eine zeilenwechselnde und/oder bildwechselnde Phasenverschiebung (49) hat.

6. Verfahren nach Anspruch 1, wobei das genannte wenigstens eine horizontale Randsignal (2a, 2b) eine Spitze-zu-Spitze-Amplitude von weniger als 20% einer Differenz zwischen einem Maximalschwarzpegel und einem Maximalweißpegel des genannten Fernsehsignals hat.

7. Erweitertes Fernsehsignal, wobei ein Breitbildsignal (1) und wenigstens ein horizontales Randsignal (2a. 2b) zusammen ein Bildsignal mit einem Norm-Seitenverhältnis bilden, wobei das genannte Breitbildsignal (1) und das genannte wenigstens eine horizontale Randsignal (2a, 2b) vertikal benachbarte Positionen einnehmen, wobei
ein zusätzliches einem Hilfsträgersignal aufmoduliertes (47) Auflösungsinformationssignal ein moduliertes Hilfsträgersignal bildet mit nahezu keinen horizontalen Frequenzanteilen unterhalb 500 kHz, wobei das genannte modulierte Hilfsträgersignal nach weiterer Verarbeitung (49-53) das genannte wenigstens eine horizontale Randsignal (2a, 2b) bildet, und wobei das genannte wenigstens eine horizontale Randsignal eine Spitze-zu-Spitze-Amplitude hat, die kleiner ist als etwa 60% einer Differenz zwischen einem Maximalschwarzpegel und einem Maximalweißpegel des genannten Fernsehsignals.

8. Verfahren zum Decodieren eines erweiterten Fernsehsignals, wobei ein Breitbildsignal (1) und wenigstens ein horizontales Randsignal (2a, 2b) zusammen ein Bildsignal mit einem Norm-Seitenverhältnis bilden, wobei das genannte Breitbildsignal (1) und das genannte eine horizontale Randsignal (2a, 2b) vertikal benachbarte Positionen einnehmen und wobei in dem erweiterten Fernsehsignal ein zusätzliches Auflösungsinformationssignal innerhalb des genannten wenigstens einen horizontalen Randes (2a, 2b) codiert ist, wobei das genannte Verfahren die nachfolgenden Verfahrensschritte aufweist:
das Trennen des genannten wenigstens einen horizontalen Randsignals (2a, 2b) von dem genannten erweiterten Fernsehsignal; und
das Wiedererhalten (51A-43A) des genannten zusätzlichen Auflösungsinformationssignals aus dem genannten wenigstens einen horizontalen Randsignal (2a, 2b) mit nahezu keinen horizontalen Frequenzanteilen unterhalb 500 kHz; wobei der genannte Wiedererhaltungsschritt (51A43A) den Verfahrensschritt der Demodulation (47A) eines modulierten Hilfsträgersignals zum Erzeugen des genannten zusätzlichen Auflösungsinformationssignals umfaßt, und wobei das genannte wenigstens eine horizontale Randsignal eine Spitze-zu-Spitze-Amplitude hat, die kleiner ist als etwa 60% einer Differenz zwischen einem Maximalschwarzpegel und einem Maximalweißpegel des genannten Fernsehsignals.

9. Anordnung zum Decodieren eines erweiterten Fernsehsignals, wobei ein Breitbildsignal (1) und wenigstens ein horizontales Randsignal (2a, 2b) zusammen ein Bildsignal mit einem Norm-Seitenverhältnis bilden, wobei das genannte Breitbildsignal (1) und das genannte wenigstens eine horizontale Randsignal (2a, 2b) vertikal benachbarte Positionen einnehmen, und wobei in dem erweiterten Fernsehsignal ein zusätzliches Auflösungsinformationssignal codiert ist innerhalb des genannten wenigstens einen horizontalen Randes (2a, 2b), wobei die genannte Anordnung die nachfolgenden Mittel aufweist:
Mittel zum Trennen des genannten wenigstens einen horizontalen Randsignals (2a, 2b) aus dem genannten erweiterten Fernsehsignal; und
Mittel (51A-43A) zum Wiedererhalten des genannten zusätzlichen Auflösungsinformationssignals aus dem genannten wenigstens einen horizontalen Randsignal (2a, 2b) mit nahezu keinen horizontalen Frequenzanteilen unterhalb 500 kHz; wobei die genannten Wiedererhaltungsmittel (51A-43A) Mittel enthalten zum Demodulieren (47A) eines modulierten Hilfsträgersignals zum Erzeugen des genannten zusätzlichen Auflösungsinformationssignals, und wobei das genannte wenigstens eine horizontale Randsignal eine Spitze-zu-Spitze-Amplitude hat, die kleiner ist als etwa 60% einer Differenz zwischen einem Maximalschwarzpegel und einem Maximalweißpegel des genannten Fernsehsignals.

10. Anordnung nach Anspruch 9, wobei das genannte modulierte Hilfsträgersignal die Frequenz eines Norm-Farbhilfsträgers hat oder des genannten Norm-Farbhilfsträgers multipliziert mit einem einfachen rationellen Faktor.

11. Anordnung nach Anspruch 9, wobei das genannte modulierte Hilfsträgersignal die Frequenz eines Norm-Farbhilfsträgers hat und eine Phasenverschiebung zwischen 45° und 135°, Ränder eingeschlossen, unter Bezugnahme auf einen Farbhilfsträger mit einer Phase entsprechend einer, auf der U-Farbinformation aufinoduliert ist.

12. Anordnung nach Anspruch 9, wobei das genannte modulierte Hilfsträgersignal die Frequenz eines Norm-Farbhilfsträgers hat und eine zeilenwechselnde und/oder bildwechselnde Phasenverschiebung (49A).

## Patentansprüche (Patentansprüche für folgende(n) Vertragsstaat(en): ES, LU)

1. Verfahren zum Codieren eines Fernsehsignals in Kompatibilität mit einem Fernsehsignal mit einem Norm-Seitenverhältnis, wobei dieses Verfahren die nachfolgenden Verfahrensschritte aufweist:
das Filtern des genannten Fernsehsignals zum Erhalten eines Breitbildsignals (1);
das Filtern des genannten Fernsehsignals zum Erhalten eines zusätzlichen Auflösungsinformationssignals;
das Verarbeiten des genannten zusätzlichen Auflösungsinformationssignals zum Bilden wenigstens eines horizontalen Randsignals (2a, 2b); und
das Kombinieren des genannten Breitbildsignals (1) und des genannten wenigstens einen horizontalen Randsignals (2a, 2b) zum Bilden eines Bildsignals mit einem Norm-Seitenverhältnis, wobei das genannte Breitbildsignal (1) und das genannte wenigstens eine horizontale Randsignal (2a, 2b) vertikal benachbarte Positionen einnehmen; wobei
der genannte Verarbeitungsschritt die Schritte der Modulation (47) des genannten zusätzlichen Auflösungsinformationssignals auf einem Hilfsträger zum Erzeugen eines modulierten Hilfsträgersignals mit nahezu keinen horizontalen Frequenzanteilen unterhalb 500 kHz, und weiterhin der Verarbeitung (49-53) des genannten modulierten Hilfsträgersignals zum Bilden des genannten wenigstens einen horizontalen Randsignals (2a, 2b) umfaßt.

2. Verfahren nach Anspruch 1, wobei das genannte zusätzliche Auflösungsinformationssignal vor der genannten Modulation (47) tiefpaßgefiltert (45) wird oder wobei das genannte modulierte Hilfsträgersignal hochpaßgefiltert wird.

3. Verfahren nach Anspruch 1, wobei das genannte Hilfsträgersignal die Frequenz eines Norm-Farbhilfsträgers oder des genannten Norm-Farbhilfsträgers multipliziert mit einem einfachen rationellen Faktor aufweist.

4. Verfahren nach Anspruch 1, wobei das genannte Hilfsträgersignal die Frequenz eines Norm-Farbhilfsträgers und eine Phasenverschiebung zwischen 45° und 135°, einschließlich der Ränder, aufweist, dabei bezugnehmend auf einen Farbhilfsträger mit einer Phase entsprechend derjenigen, der U Farbinformation aufinoduliert ist.

5. Verfahren nach Anspruch 1, wobei das genannte Hilfsträgersignal die Frequenz eines Norm-Farbhilfsträgersignals und eine zeilenwechselnde und/oder bildwechselnde Phasenverschiebung (49) hat.

6. Verfahren nach Anspruch 1, wobei das genannte wenigstens eine horizontale Randsignal (2a, 2b) eine Spitze-zu-Spitze-Amplitude von weniger als etwa 60%, vorzugsweise weniger als 20% einer Differenz zwischen einem Maximalschwarzpegel und einem Maximalweißpegel des genannten Fernsehsignals hat.

7. Erweitertes Fernsehsignal, wobei ein Breitbildsignal (1) und wenigstens ein horizontales Randsignal (2a. 2b) zusammen ein Bildsignal mit einem Norm-Seitenverhältnis bilden, wobei das genannte Breitbildsignal (1) und das genannte wenigstens eine horizontale Randsignal (2a, 2b) vertikal benachbarte Positionen einnehmen, wobei
ein zusätzliches einem Hilfsträgersignal aufmoduliertes (47) Auflösungsinformationssignal ein moduliertes Hilfsträgersignal bildet mit nahezu keinen horizontalen Frequenzanteilen unterhalb 500 kHz, wobei das genannte modulierte Hilfsträgersignal nach weiterer Verarbeitung (49-53) das genannte wenigstens eine horizontale Randsignal (2a, 2b) bildet.

8. Verfahren zum Decodieren eines erweiterten Fernsehsignals, wobei ein Breitbildsignal (1) und wenigstens ein horizontales Randsignal (2a, 2b) zusammen ein Bildsignal mit einem Norm-Seitenverhältnis bilden, wobei das genannte Breitbildsignal (1) und das genannte eine horizontale Randsignal (2a, 2b) vertikal benachbarte Positionen einnehmen und wobei in dem erweiterten Fernsehsignal ein zusätzliches Auflösungsinformationssignal innerhalb des genannten wenigstens einen horizontalen Randes (2a, 2b) codiert wird, wobei das genannte Verfahren die nachfolgenden Verfahrensschritte aufweist:
das Trennen des genannten wenigstens einen horizontalen Randsignals (2a, 2b) von dem genannten erweiterten Fernsehsignal; und
das Wiedererhalten (51A-43A) des genannten zusätzlichen Auflösungsinformationssignals aus dem genannten wenigstens einen horizontalen Randsignals (2a, 2b) mit nahezu keinen horizontalen Frequenzanteilen unterhalb 500 kHz; wobei der genannte Wiedererhaltungsschritt (51A-43A) den Verfahrensschritt der Demodulation (47A) eines modulierten Hilfsträgersignals zum Erzeugen des genannten zusätzlichen Auflösungsinformationssignals umfaßt.

9. Anordnung zum Decodieren eines erweiterten Fernsehsignals, wobei ein Breitbildsignal (1) und wenigstens ein horizontales Randsignal (2a, 2b) zusammen ein Bildsignal mit einem Norm-Seitenverhältnis bilden, wobei das genannte Breitbildsignal (1) und das genannte wenigstens eine horizontale Randsignal (2a, 2b) vertikal benachbarte Positionen einnehmen, und wobei in dem erweiterten Fernsehsignal ein zusätzliches Auflösungsinformationssignal codiert ist innerhalb des genannten wenigstens einen horizontalen Randes (2a, 2b), wobei die genannte Anordnung die nachfolgenden Mittel aufweist:
Mittel zum Trennen des genannten wenigstens einen horizontalen Randsignals (2a, 2b) aus dem genannten erweiterten Fernsehsignal; und
Mittel (51A-43A) zum Wiedererhalten des genannten zusätzlichen Auflösungsinformationssignals aus dem genannten wenigstens einen horizontalen Randsignal (2a, 2b) mit nahezu keinen horizontalen Frequenzanteilen unterhalb 500 kHz; wobei die genannten Wiedererhaltungsmittel (51A-43A) Mittel enthalten zum Demodulieren (47A) eines modulierten Hilfsträgersignals zum Erzeugen des genannten zusätzlichen Auflösungsinformationssignals.

10. Anordnung nach Anspruch 9, wobei das genannte modulierte Hilfsträgersignal die Frequenz eines Norm-Farbhilfsträgers hat oder des genannten Norm-Farbhilfsträgers multipliziert mit einem einfachen rationellen Faktor.

11. Anordnung nach Anspruch 9, wobei das genannte modulierte Hilfsträgersignal die Frequenz eines Norm-Farbhilfsträgers hat und eine Phasenverschiebung zwischen 45° und 135°, Ränder eingeschlossen, unter Bezugnahme auf einen Farbhilfsträger mit einer Phase entsprechend einer, auf der U-Farbinformation aufmoduliert ist.

12. Anordnung nach Anspruch 9, wobei das genannte modulierte Hilfsträgersignal die Frequenz eines Norm-Farbhilfsträgers hat und eine zeilenwechselnde und/oder bildwechselnde Phasenverschiebung (49A).

## Revendications (Revendications pour l'(les) Etat(s) contractant(s) suivant(s): DE, FR, GB, IT)

1. Procédé de codage d'un signal de télévision en compatibilité avec un signal de télévision à rapport largeur:hauteur standard, comprenant les étapes suivantes :
filtrer ledit signal de télévision pour obtenir un signal d'image de format large (1),
filtrer ledit signal de télévision pour obtenir un signal d'information de résolution supplémentaire,
traiter ledit signal d'information de résolution supplémentaire pour former au moins un signal de bordure horizontale (2a, 2b), et
combiner ledit signal d'image de format large (1) et ledit au moins un signal de bordure horizontale (2a, 2b) pour former un signal d'image de rapport largeur:hauteur standard dans lequel ledit signal d'image de format large (1) et ledit au moins un signal de bordure horizontale (2a, 2b) occupent des positions verticalement voisines, procédé dans lequel :
ladite étape de traitement comprend une modulation (47) dudit signal d'information de résolution supplémentaire sur un signal de sous-porteuse afin de produire un signal de sous-porteuse modulé n'ayant sensiblement pas de composantes horizontales de fréquence en dessous de 500 kHz, et en outre un traitement (49-53) dudit signal de sous-porteuse modulé afin de former ledit au moins un signal de bordure horizontale (2a, 2b), et dans lequel ledit au moins un signal de bordure horizontale a une amplitude de crête à crête inférieure à environ 60% d'une différence entre un niveau de noir maximum et un niveau de blanc maximum dudit signal de télévision.

2. Procédé selon la revendication 1, dans lequel ledit signal d'information de résolution supplémentaire est soumis à un filtrage passe-bas (45) avant ladite modulation (47) ou dans lequel ledit signal de sous-porteuse modulé est soumis à un filtrage passe-haut.

3. Procédé selon la revendication 1, dans lequel ledit signal de sous-porteuse a la fréquence d'une sous-porteuse de chrominance standard ou de ladite sous-porteuse de chrominance standard multipliée par un simple facteur rationnel.

4. Procédé selon la revendication 1, dans lequel ledit signal de sous-porteuse a la fréquence d'une sous-porteuse de chrominance standard et un déphasage compris entre 45 et 135 degrés, bordures incluses, avec référence à une sous-porteuse de couleur ayant une phase égale à celle sur laquelle les informations de couleur U sont modulées.

5. Procédé selon la revendication 1, dans lequel ledit signal de sous-porteuse a la fréquence d'une sous-porteuse de chrominance standard et un déphasage en alternance de ligne et/ou en alternance de trame (49).

6. Procédé selon la revendication 1, dans lequel ledit au moins un signal de bordure horizontale (2a, 2b) a une amplitude de crête à crête inférieure à environ 20% d'une différence entre un niveau de noir maximum et un niveau de blanc maximum dudit signal de télévision.

7. Signal de télévision étendu, dans lequel un signal d'image de format large (1) et au moins un signal de bordure horizontale (2a, 2b) forment ensemble un signal d'image de rapport largeur:hauteur standard dans lequel ledit signal d'image de format large (1) et ledit au moins un signal de bordure horizontale (2a, 2b) occupent des positions voisines verticalement, signal dans lequel :
un signal d'information de résolution supplémentaire modulé (47) sur un signal de sous-porteuse forme un signal de sous-porteuse modulé n'ayant sensiblement pas de composantes horizontales de fréquence en dessous de 500 kHz, ledit signal de sous-porteuse modulé, après un autre traitement (49-53), formant ledit au moins un signal de bordure horizontale (2a, 2b), et dans lequel ledit au moins un signal de bordure horizontale a une amplitude de crête à crête inférieure à environ 60% d'une différence entre un niveau de noir maximum et un niveau de blanc maximum dudit signal de télévision.

8. Procédé de décodage d'un signal de télévision étendu, dans lequel un signal d'image de format large (1) et au moins un signal de bordure horizontale (2a, 2b) forment ensemble un signal d'image de rapport largeur:hauteur standard dans lequel ledit signal d'image de format large (1) et ledit au moins un signal de bordure horizontale (2a, 2b) occupent des positions voisines verticalement, le signal de télévision étendu étant tel qu'un signal d'information de résolution supplémentaire soit codé à l'intérieur de ladite au moins une bordure horizontale (2a, 2b), ledit procédé comprenant les étapes suivantes:
séparer ledit au moins un signal de bordure horizontale (2a, 2b) dudit signal de télévision étendu, et
récupérer (51A-43A) ledit signal d'information de résolution supplémentaire dudit au moins un signal de bordure horizontale (2a, 2b) n'ayant sensiblement pas de composantes horizontales de fréquence en dessous de 500 kHz, ladite étape de récupération (51A-43A) comprenant l'étape de démodulation (47A) d'un signal de sous-porteuse modulé afin de produire ledit signal d'information de résolution supplémentaire, et dans lequel ledit au moins un signal de bordure horizontale a une amplitude de crête à crête inférieure à environ 60% d'une différence entre un niveau de noir maximum et un niveau de blanc maximum dudit signal de télévision.

9. Appareil de décodage d'un signal de télévision étendu, dans lequel un signal d'image de format large (1) et au moins un signal de bordure horizontale (2a, 2b) forment ensemble un signal d'image de rapport largeur:hauteur standard dans lequel ledit signal d'image de format large (1) et ledit au moins un signal de bordure horizontale (2a, 2b) occupent des positions voisines verticalement, le signal de télévision étendu étant tel qu'un signal d'information de résolution supplémentaire soit codé à l'intérieur de ladite au moins une bordure horizontale (2a, 2b), ledit appareil comprenant :
des moyens pour séparer ledit au moins un signal de bordure horizontale (2a, 2b) dudit signal de télévision étendu, et
des moyens (51A-43A) pour récupérer ledit signal d'information de résolution supplémentaire dudit au moins un signal de bordure horizontale (2a, 2b) n'ayant sensiblement pas de composantes horizontales de fréquence en dessous de 500 kHz, lesdits moyens de récupération (51A-43A) comprenant des moyens pour démoduler (47A) un signal de sous-porteuse modulé afin de produire ledit signal d'information de résolution supplémentaire, et dans lequel ledit au moins un signal de bordure horizontale a une amplitude de crête à crête inférieure à environ 60% d'une différence entre un niveau de noir maximum et un niveau de blanc maximum dudit signal de télévision.

10. Appareil selon la revendication 9, dans lequel ledit signal de sous-porteuse modulé a la fréquence d'une sous-porteuse de chrominance standard ou de ladite sous-porteuse de chrominance standard multipliée par un facteur rationnel simple.

11. Appareil selon la revendication 9, dans lequel ledit signal de sous-porteuse modulé a la fréquence d'une sous-porteuse de chrominance standard et un déphasage compris entre 45 et 135 degrés, bordures incluses, avec référence à une sous-porteuse de couleur ayant une phase égale à celle sur laquelle des informations de couleur U sont modulées.

12. Appareil selon la revendication 9, dans lequel ledit signal de sous-porteuse modulé a la fréquence d'une sous-porteuse de chrominance standard et un déphasage en alternance de ligne et/ou en alternance de trame (49A).

## Revendications (Revendications pour l'(les) Etat(s) contractant(s) suivant(s): ES, LU)

1. Procédé de codage d'un signal de télévision en compatibilité avec un signal de télévision à rapport largeur:hauteur standard, comprenant les étapes suivantes:
filtrer ledit signal de télévision pour obtenir un signal d'image de format large (1);
filtrer ledit signal de télévision pour obtenir un signal d'information de résolution supplémentaire;
traiter ledit signal d'information de résolution supplémentaire pour former au moins un signal de bordure horizontale (2a, 2b), et
combiner ledit signal d'image de format large (1) et ledit au moins un signal de bordure horizontale (2a, 2b) pour former un signal d'image de rapport largeur:hauteur standard dans lequel ledit signal d'image de format large (1) et ledit au moins un signal de bordure horizontale (2a, 2b) occupent des positions verticalement voisines, procédé dans lequel :
ladite étape de traitement comprend une modulation (47) dudit signal d'information de résolution supplémentaire sur un signal de sous-porteuse afin de produire un signal de sous-porteuse modulé n'ayant sensiblement pas de composantes horizontales de fréquence en dessous de 500 kHz, et en outre un traitement (49-53) dudit signal de sous-porteuse modulé afin de former ledit au moins un signal de bordure horizontale (2a, 2b).

2. Procédé selon la revendication 1, dans lequel ledit signal d'information de résolution supplémentaire est soumis à un filtrage passe-bas (45) avant ladite modulation (47) ou dans lequel ledit signal de sous-porteuse modulé est soumis à un filtrage passe-haut.

3. Procédé selon la revendication 1, dans lequel ledit signal de sous-porteuse a la fréquence d'une sous-porteuse de chrominance standard ou de ladite sous-porteuse de chrominance standard multipliée par un simple facteur rationnel.

4. Procédé selon la revendication 1, dans lequel ledit signal de sous-porteuse a la fréquence d'une sous-porteuse de chrominance standard et un déphasage compris entre 45 et 135 degrés, bordures incluses, avec référence à une sous-porteuse de couleur ayant une phase égale à celle sur laquelle les informations de couleur U sont modulées.

5. Procédé selon la revendication 1, dans lequel ledit signal de sous-porteuse a la fréquence d'une sous-porteuse de chrominance standard et un déphasage en alternance de ligne et/ou en alternance de trame (49).

6. Procédé selon la revendication 1, dans lequel ledit au moins un signal de bordure horizontale (2a, 2b) a une amplitude de crête à crête inférieure à environ 60%, de préférence inférieure à environ 20%, d'une différence entre un niveau de noir maximum et un niveau de blanc maximum dudit signal de télévision.

7. Signal de télévision étendu, dans lequel un signal d'image de format large (1) et au moins un signal de bordure horizontale (2a, 2b) forment ensemble un signal d'image de rapport largeur:hauteur standard dans lequel ledit signal d'image de format large (1) et ledit au moins un signal de bordure horizontale (2a, 2b) occupent des positions voisines verticalement, signal dans lequel :
un signal d'information de résolution supplémentaire modulé (47) sur un signal de sous-porteuse forme un signal de sous-porteuse modulé n'ayant sensiblement pas de composantes horizontales de fréquence en dessous de 500 kHz, ledit signal de sous-porteuse modulé, après un autre traitement (49-53), formant ledit au moins un signal de bordure horizontale (2a, 2b).

8. Procédé de décodage d'un signal de télévision étendu, dans lequel un signal d'image de format large (1) et au moins un signal de bordure horizontale (2a, 2b) forment ensemble un signal d'image de rapport largeur:hauteur standard dans lequel ledit signal d'image de format large (1) et ledit au moins un signal de bordure horizontale (2a, 2b) occupent des positions voisines verticalement, le signal de télévision étendu étant tel qu'un signal d'information de résolution supplémentaire soit codé à l'intérieur de ladite au moins une bordure horizontale (2a, 2b), ledit procédé comprenant les étapes suivantes:
séparer ledit au moins un signal de bordure horizontale (2a, 2b) dudit signal de télévision étendu, et
récupérer (51A-43A) ledit signal d'information de résolution supplémentaire dudit au moins un signal de bordure horizontale (2a, 2b) n'ayant sensiblement pas de composantes horizontales de fréquence en dessous de 500 kHz, ladite étape de récupération (51A-43A) comprenant l'étape de démodulation (47A) d'un signal de sous-porteuse modulé afin de produire ledit signal d'information de résolution supplémentaire.

9. Appareil de décodage d'un signal de télévision étendu, dans lequel un signal d'image de format large (1) et au moins un signal de bordure horizontale (2a, 2b) forment ensemble un signal d'image de rapport largeur:hauteur standard dans lequel ledit signal d'image de format large (1) et ledit au moins un signal de bordure horizontale (2a, 2b) occupent des positions voisines verticalement, le signal de télévision étendu étant tel qu'un signal d'information de résolution supplémentaire soit codé à l'intérieur de ladite au moins une bordure horizontale (2a, 2b), ledit appareil comprenant :
des moyens pour séparer ledit au moins un signal de bordure horizontale (2a, 2b) dudit signal de télévision étendu, et
des moyens (51A-43A) pour récupérer ledit signal d'information de résolution supplémentaire dudit au moins un signal de bordure horizontale (2a, 2b) n'ayant sensiblement pas de composantes horizontales de fréquence en dessous de 500 kHz, lesdits moyens de récupération (51A-43A) comprenant des moyens pour démoduler (47A) un signal de sous-porteuse modulé afin de produire ledit signal d'information de résolution supplémentaire.

10. Appareil selon la revendication 9, dans lequel ledit signal de sous-porteuse modulé a la fréquence d'une sous-porteuse de chrominance standard ou de ladite sous-porteuse de chrominance standard multipliée par un facteur rationnel simple.

11. Appareil selon la revendication 9, dans lequel ledit signal de sous-porteuse modulé a la fréquence d'une sous-porteuse de chrominance standard et un déphasage compris entre 45 et 135 degrés, bordures incluses, avec référence à une sous-porteuse de couleur ayant une phase égale à celle sur laquelle des informations de couleur U sont modulées.

12. Appareil selon la revendication 9, dans lequel ledit signal de sous-porteuse modulé a la fréquence d'une sous-porteuse de chrominance standard et un déphasage en alternance de ligne et/ou en alternance de trame (49A).
